# EUROPÄISCHE PATENTSCHRIFT

(11) **EP 1 132 294 B1**
(45) Veröffentlichungstag und Bekanntmachung des Hinweises auf die Patenterteilung: **18.08.2004**
(21) Anmeldenummer: 01102447.8
(22) Anmeldetag: 03.02.2001
(51) Int. Cl.: B64D 11/06, B60N 2/30

(54) **Fluggastsitz für eine Flugzeugpassagierkabine**
Aircraft passenger seat
Siège pour passager d'aéronef

(30) Priorität: 24.10.2000 DE 10052591; 09.03.2000 DE 10011422
(43) Veröffentlichungstag der Anmeldung: 12.09.2001
(73) Patentinhaber: Airbus Deutschland GmbH, 21129 Hamburg (DE)
(72) Erfinder: Romca, Jens, 54106 Kiel (DE); Müller, Jochen, 54106 Kiel (DE)
(74) Vertreter: Hansmann, Dierk, Dipl.-Ing.

(56) Entgegenhaltungen:
- GB-A- 1 060 383
- GB-A- 1 278 501
- GB-A- 2 292 676
- US-A- 3 762 766

## Beschreibung

Die Erfindung betrifft einen Fluggastsitz für eine Flugzeugpassagierkabine, wobei der Fluggastsitz ein Sitzgestell, eine Sitzfläche und eine Rückenlehne aufweist und mindestens ein Verstellmechanismus zur Einstellung von Sitzpositionen vorgesehen ist.

An Fluggastsitze in Flugzeugpassagierkabinen werden im Zuge der Verbesserung des Komforts immer größere Anforderungen gestellt. So ist die Verstellbarkeit von Elementen bei Fluggastsitzen von einer normalen Sitzposition in eine Schlafposition Stand der Technik - wie DE 197 42 773 A1 zeigt - oder auch die Veränderung der Sitzbreiten ist zur Komforterhöhung bekannt, wie beispielsweise aus EP 322 930 A2 entnommen werden kann. Neben der Komforterhöhung ist ein weiterer maßgeblicher Gesichtspunkt bei der Gestaltung von Flugzeugpassagierkabinen das Ermöglichen eines schnellen Einund Aussteigens der Passagiere.
Der Ablauf eines derzeitigen Einsteige- oder Aussteigevorgangs macht deutlich, dass bei Boarding und Deboarding der Passagiere regelrechte Blockadesituationen entstehen, wenn Passagiere ihr Kabinengepäck in den Stowage Bins (Gepäckablagen) verstauen bzw. aus diesen entnehmen. Sie stehen dabei im Kabinenlängsgang, um die oberhalb der Sitzreihen angeordneten Gepäckablagen zu erreichen und bringen den Passagierfluss ins Stocken. Die für das Einsteigen in ein Flugzeug benötigte Zeit verlängert sich dadurch und wirkt sich negativ auf die Bodenzeit eines Flugzeuges - eine maßgebliche Größe für die Wirtschaftlichkeit eines Flugzeuges - aus.

Aus GB-A-1 060 383 ist ein Passagiersitz mit Verstellmöglichkeiten zum Einstellen von Sitzpositionen bekannt. Es ist ersichtlich, dass eine Rückenlehne und eine Sitzfläche eine Sitzschale bilden. Die gesamte Sitzschale kann in ihrer Position verschoben oder auch nach vom geklappt werden. Eine zwangsläufige Verschiebung des Sitzteiles relativ zur Position der Rückenlehne ist hier jedoch nicht vorgesehen.

US-A-3 762 766 zeigt einen Fahrzeugsitz, bei dem das Sitzteil hochgeklappt werden kann. Das Sitzteil führt zur Positionsänderung eine Drehbewegung und keine geradlinige Verschiebebewegung aus. Ein Hochschwenken des Sitzteiles erfolgt durch Federkraft, wenn ein Sitzender aufsteht. Es ist eine Kopplung der Bewegungen von Sitzteil und Rückenlehne so ausgelegt, dass durch die Hochschwenkbewegung des Sitzteiles mit dem Einschalten eines Hydraulikmotors die Kolbenstange ausgefahren wird und damit zwangsläufig die Rückenlehne in eine senkrechte Position verschwenkt wird. Eine Verstellung der Rückenlehne ist über die Normalposition hinaus möglich, jedoch hat eine Verstellung der Rückenlehne keine Auswirkungen auf eine Bewegung des Sitzteiles.

Aus der GB-A-2 292 676 ist weiterhin ein Sitz bekannt, welcher eine koppeleinrichtung zwischen der Schwenkbewegung der Rückenlehne und der verschiebebewegung der Sitzfläche aufweist. Ein verstellen in eine Parkposition ist hier jedoch nicht möglich.

Der Erfindung liegt daher die Aufgabe zugrunde, einen Fluggastsitz der eingangs genannten Art derart auszubilden, dass durch die Verstellung der Rückenlehne mit einem einfachen Mechanismus zwangsläufg das Sitzteil verschoben werden kann und damit durch das Zurückschieben des Sitzes mehr Platz zwischen den Sitzreihen erreicht wird. Insbesondere werden die Passagiere beim Be- und Entladen des Kabinengepäcks aus dem Längsgang des Flugzeuges herausgehalten, um dort den Verkehrsfluss für ein zügiges Boarding und Deboarding der Passagiere aufrecht zu erhalten.

Der Erfindung liegt daher die Aufgabe zugrunde, einen Fluggastsitz der eingangs genannten Art derart auszubilden, dass die aus dem Stand der Technik bekannten Nachteile beseitigt und insbesondere die Passagiere beim Be- und Entladen des Kabinengepäcks aus dem Längsgang des Flugzeuges herausgehalten werden, um dort den Verkehrsfluss für ein zügiges Boarding und Deboarding der Passagiere aufrecht zu erhalten.

Diese Aufgabe wird bei einem gattungsgemäßen Fluggastsitz mit den im Patentanspruch 1 genannten Maßnahmen gelöst.

Dabei ist insbesondere von Vorteil, dass neben der Einstellpositionen von Sitzen für den Passagier zur Komfortverbesserung die Wirtschaftlichkeit eines Verkehrsflugzeuges erhöht werden kann, wenn mit dem Einstellen einer Parkposition eines Sitzes der Bewegungsraum für einen zwischen die Sitzreihen tretenden Passagier erhöht werden kann und somit für den Zugriff zu den Gepäckablagen der Kabinenlängsgang nicht mehr von Passagieren blockiert wird und eine schnelleres Ein- und Aussteigen der Passagiere erreicht wird, was die Bodenzeit eines Flugzeuges zwischen aufeinanderfolgenden Flügen - genannt Turn-Round-Time - verkürzt.

Weiterbildungen und vorteilhafte Ausgestaltungen sind in den Unteransprüchen 2 bis 5 angegeben sowie in der nachfolgenden Figurenbeschreibung dargestellt.

In der Zeichnung ist ein Ausführungsbeispiel der Erfindung dargestellt, welches nachstehend anhand der Figuren 1 bis 4 näher beschrieben wird. In den Figuren sind gleiche Bauteile mit gleichen Bezugszeichen versehen.

Es zeigt
- Fig. 1: eine Ansicht auf einen Bereich einer Flugzeugpassagierkabine mit zwei hintereinander angeordneten Passagiersitzgruppen,
- Fig. 2: eine Ansicht von der Seite auf einen Fluggastsitz in Normalposition,
- Fig. 3: eine Ansicht von der Seite auf einen Fluggastsitz in Parkposition und
- Fig. 4: eine Ansicht von der Seite auf einen Fluggastsitz in Schlafposition.

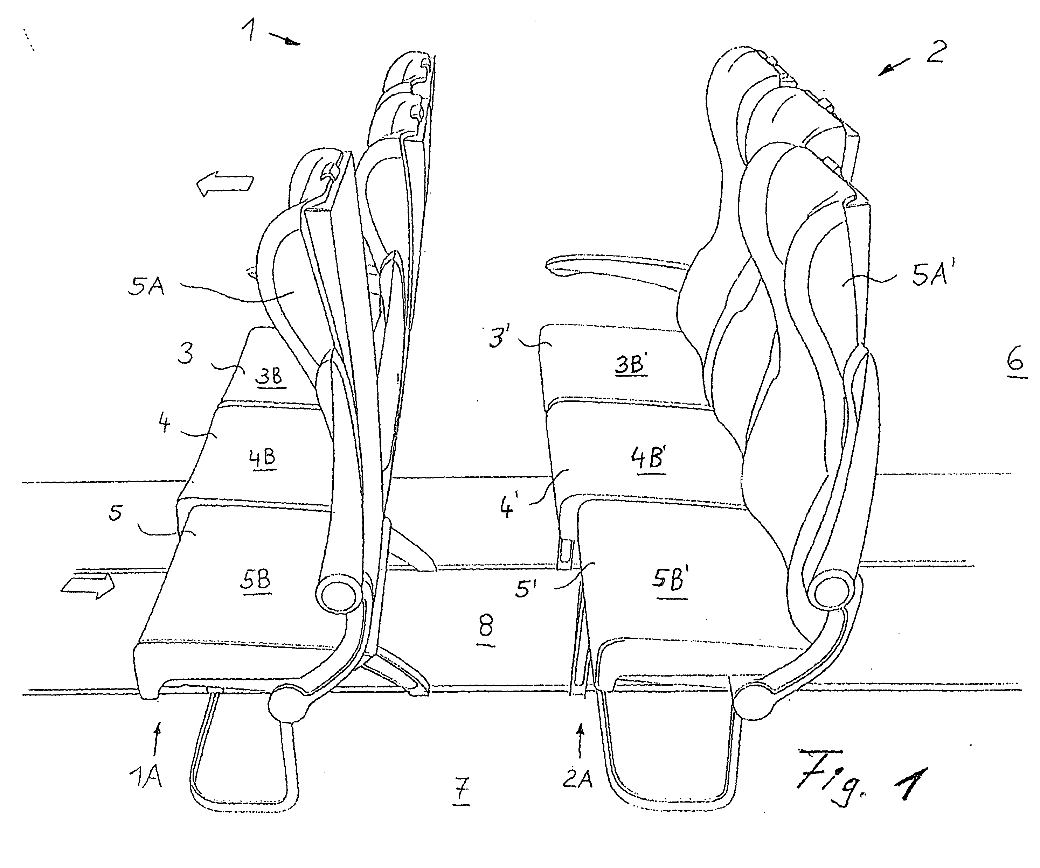

In Fig. 1 sind zwei Passagiersitzgruppen 1 und 2 in einer perspektivischen Ansicht dargestellt. Eine derartige Passagiersitzgruppe 1 oder 2 besteht in der gezeigten Ausführung aus jeweils drei Passagiersitzen 3, 4 und 5 bzw. 3', 4' und 5'. Die Passagiersitzgruppen 1 und 2 sind in einer Flugzeugpassagierkabine 6 hintereinander angeordnet und bilden zwei Sitzreihen 1A und 2A. Ein Kabinenlängsgang 7 in der Passagierkabine 6 verläuft senkrecht zu den Sitzreihen 1A und 2A. Die Fluggäste gehen während der Ein- und Aussteigephase über den Kabinenlängsgang 7 zu den Ihnen zugewiesenen Sitzplätzen bzw. von den Sitzplätzen in Richtung Ausgang. Um das Gepäck in den Gepäckablagen (nicht gezeigt) oberhalb der Sitzreihen 1A und 2A zu verstauen, kann ein Fluggast in einen Zwischenraum 8 zwischen den Sitzreihen 1A und 2A treten. Damit bleibt der Kabinenlängsgang 7 für den Passagierverkehr frei und ein zügiges Ein- und Aussteigen der Passagiere ist gewährleistet. Der Platz zwischen den Sitzreihen 1A und 2A (Zwischenraum 8) ist aufgrund der meist engen Sitzreihenabstände bei einem Passagiersitz in Normalposition nicht ausreichend, um stehen zu können und die Gepäckablagen zu bedienen. Erfindungsgemäß ist zumindest am gangseitigen Passagiersitz 5 bzw. 5' eine Verstellung des Sitzes in eine Parkposition vorgesehen, die den Bewegungsraum zwischen den Sitzen vergrößert. In der Parkposition wird durch eine entsprechende Kinematik eines Sitzverstellmechanismusses erreicht, dass die Rückenlehne 5A des Sitzes 5 (bzw. 5A' des Sitzes 5') über die Normalstellung hinaus nach vorn neigbar ist. Vorzugsweise gekoppelt an das Vorneigen der Rückenlehne 5A bzw. 5A' wird die Sitzfläche 5B bzw. 5B' zurückgezogen, was im Zwischenraum 8 im Bereich des Sitzes 5' einen vergrößerten Bewegungsraum ermöglicht und somit außerhalb des Längsganges 7 zwischen den Sitzreihen 1A und 2A auch Passagiere stehend die Gepäckablagen erreichen können. Es ist in Fig. 1 ersichtlich, dass lediglich der gangseitige Sitz 5 bzw. 5' mit einem Sitzverstellmechanismus ausgestattet ist. Jedoch ist es möglich, dass beispielsweise auch der Mittelsitz 4 bzw. 4' eine derartige Parkposition einnehmen kann, um das Platznehmen in der entsprechenden Sitzreihe 1A bzw. 2A am Sitz 3 bzw.3' zu erleichtern.

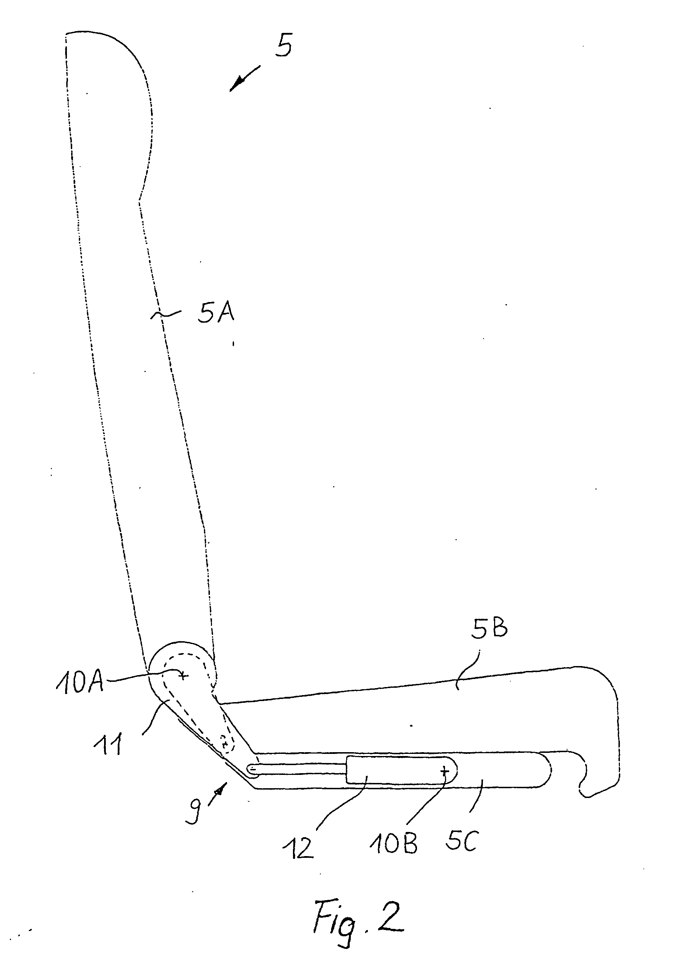

In den Figuren 2 bis 4 sind die möglichen Sitzeinstellpositionen des Passagiersitzes 5 gezeigt.
In Fig.2 ist die Normalposition des Passagiersitzes 5 ersichtlich. In dieser Position ist die Rückenlehne 5A nahezu senkrecht zur Sitzfläche 5B eingestellt. Am Sitzgestell 5C ist ein Sitzeinstellmechanismus 9 vorgesehen, der am Gelenkpunkt 10A der Rückenlehne 5A ein Verschwenken derselben bewirkt. Mechanismen zur Sitzverstellung sind im Stand der Technik in vielfältiger Form bekannt, die für die vorliegende Ausführungsform angewendet werden können. In der gezeigten Ausführungsform weist der Verstellmechanismus 9 ein Hebelelement 11 und eine Gasfeder 12 auf, um eine gedämpfte Schwenkbewegung der Rückenlehne 5A zwischen Schlafposition und Normalposition zu ermöglichen.
Die Gasfeder 12 ist am Anschlusspunkt 10B am Sitzgestell 5C drehbar gelagert.

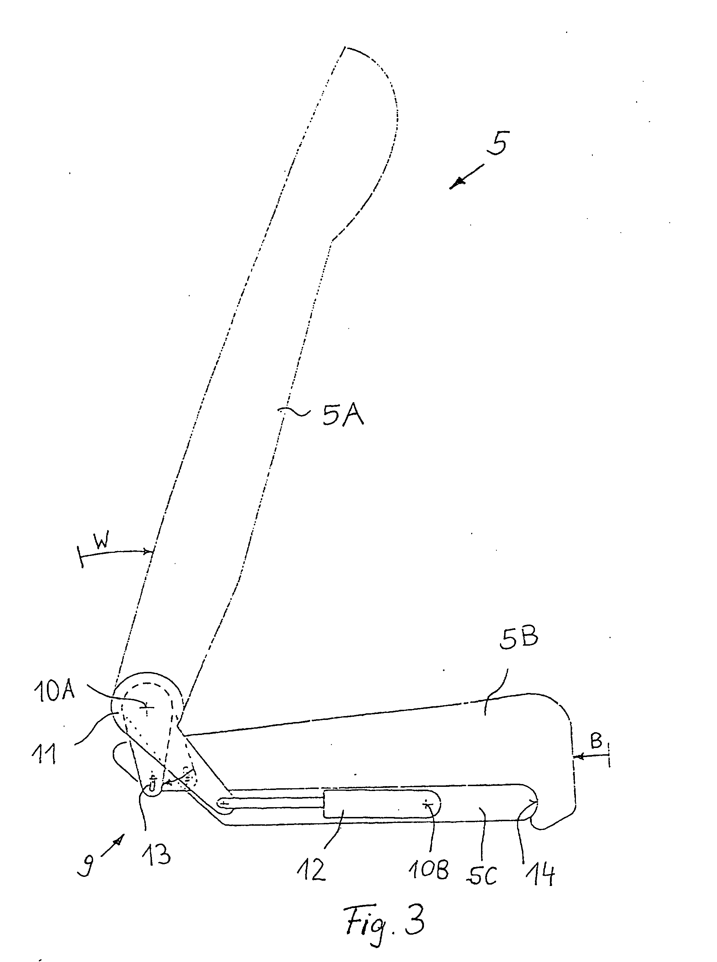

In Fig. 3 ist der Passagiersitz 5 in Parkposition gezeigt. Der Verstellmechanismus 9 ermöglicht ein Vorneigen der Rückenlehne 5A um den Winkel W. Die Neigung kann in der gezeigten Ausführungsform etwa 20° bis 30° gegenüber der Normalstellung betragen. Gekoppelt an das Vorneigen der Rückenlehne 5A ist ein Zurückziehen der Sitzfläche 5B um eine Breite B. Das Sitzgestell 5C ist fest mit der Flugzeugstruktur verbunden und die Sitzfläche 5B wird mittels eines Koppelelementes 13 am Verstellmechanismus 9 durch die Drehung der Rückenlehne 5A um den Gelenkpunkt 10A zurückgezogen. In der gezeigten Ausführung ist ein Zurückziehen der Sitzfläche 5A bis zu einem Anschlag 14 am Sitzgestell 5C möglich. Wenn nach dem Einsteigen der Passagiere der Passagiersitz 5 in die Normalposition gebracht wird und die Rückenlehne 5A in die Normalposition schwenkt, dann wird die Sitzfläche 5B über die Wirkverbindung mit Rückenlehne 5A und Koppelelement 13 wieder in die Gebrauchslage zurückgeschoben.
Ausgehend von der Parkposition kann auch noch ein weiteres Vorneigen der Rückenlehne 6A erfolgen, so dass eine Fluchtposition (nicht gezeigt) erreicht werden kann. Das Weiterschwenken der Rückenlehne 5A um das Gelenk 10A ist jedoch nur mit einem größeren Kraftaufwand zu realisieren, was beispielsweise mit einem Federelement erreicht wird. Ein weiteres Verschieben der Sitzfläche 5B ist nicht vorgesehen.

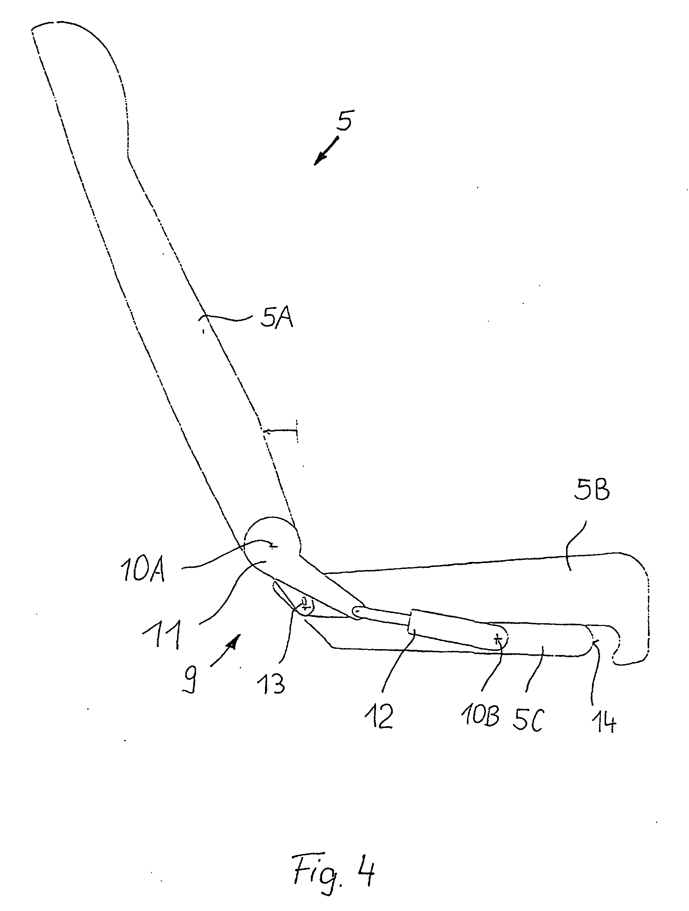

In Fig. 4 ist der Passagiersitz 5 mit einer in Schlafposition geschwenkten Rückenlehne 5A gezeigt. Diese Schwenkbewegung wird ohne Kopplung einer Bewegung der Sitzfläche 5B durchgeführt und ist mit dem Verstellmechanismus 9 realisierbar.

## Patentansprüche

1. Fluggastsitz für eine Flugzeugpassagierkabine, wobei der Fluggastsitz ein Sitzgestell, eine Sitzfläche und eine Rückenlehne aufweist und mindestens ein Verstellmechanismus zur Einstellung von Sitzpositionen vorgesehen ist, wobei in Parkposition die Rückenlehne über die Normalposition hinaus in Richtung Vorderkante der Sitzfläche vorneigbar ausgebildet ist und damit der hinter der Rückenlehne gebildete Zwischenraum vergrößerbar ist, **dadurch gekennzeichnet, dass** zum Erreichen der Parkposition neben der Neigung der Rückenlehne (5A) die Sitzfläche (5B) von der Normalposition in Richtung Rückenlehne (5A) verschiebbar ist und am Verstellmechanismus (9) eine Koppeleinrichtung (13) zur Wirkverbindung zwischen der Schwenkbewegung der Rückenlehne (5A) und der Verschiebebewegung der Sitzfläche (5B) zum Erreichen der Parkposition angeordnet ist.

2. Fluggastsitz nach Anspruch 1, **dadurch gekennzeichnet, dass** am Sitzgestell (5C) ein Anschlag (14) zur Begrenzung der Verschiebebewegung der Sitzfläche (5B) vorgesehen ist.

3. Flugzeugpassagierkabine (6) mit Passagiersitzgruppen (1, 2), die Sitzreihen (1A, 1B) bilden, **dadurch gekennzeichnet, dass** zumindest ein Fluggastsitz (5, 5') gemäß einem der Ansprüche 1 und 2 je Passagiersitzgruppe (1, 2) vorgesehen ist, wobei zumindest der einem Kabinenlängsgang (7) zugewandte Fluggastsitz (5, 5') derartig ausgebildet ist.

## Claims

1. Air passenger seat for an aircraft passenger cabin, wherein the air passenger seat comprises a seat frame, a seat surface and a back rest and at least one displacement mechanism is provided for adjusting seat positions, wherein in parking position the back rest is designed to be tiltable forward beyond the normal position in the direction of the front edge of the seat surface, thereby enabling an increase in the size of the gap formed behind the back rest, **characterized in that** in order to achieve the parking position, in addition to the inclination of the back rest (5A) the seat surface (5B) is displaceable from the normal position in the direction of the back rest (5A) and there is disposed on the displacement mechanism (9) a coupling device (13) for the working connection between the swivelling movement of the back rest (5A) and the displacement movement of the seat surface (5B) for achieving the parking position.

2. Air passenger seat according to claim 1, **characterized in that** on the seat frame (5C) a stop (14) is provided for limiting the displacement movement of the seat surface (5B).

3. Aircraft passenger cabin (6) having passenger seat groups (1, 2), which form seat rows (1A, 1B), **characterized in that** at least one air passenger seat (5, 5') according to one of claims 1 and 2 is provided per passenger seat group (1, 2), wherein at least the air passenger seat (5, 5') facing a cabin longitudinal aisle (7) is designed in such a manner.

## Revendications

1. Siège pour passager d'aéronef pour une cabine de passagers d'aéronef, dans lequel le siège pour passager d'aéronef présente une carcasse de siège, une assise et un dossier et il est prévu au moins un mécanisme de réglage pour l'ajustement des positions du siège, dans lequel le dossier, en position de stationnement, est conformé de manière inclinable au-delà de la position normale en direction du bord avant de l'assise et qu'ainsi l'espace intermédiaire formé derrière le dossier peut être agrandi, **caractérisé en ce que** pour atteindre la position de stationnement, outre l'inclinaison du dossier (5A), l'assise (5B) peut être mue de la position normale en direction du dossier (5A) et qu'un dispositif de couplage (13) est disposé sur le mécanisme de réglage (9) afin d'établir une connexion effective entre le mouvement de bascule du dossier (5A) et le mouvement coulissant de l'assise (5B) pour atteindre la position de stationnement.

2. Siège pour passager d'aéronef selon la revendication 1, **caractérisé en ce que** sur la carcasse (5C) du siège, il est prévu une butée (14) pour limiter le mouvement coulissant de l'assise (5B).

3. Cabine (6) de passagers d'aéronef avec des groupes (1, 2) de sièges pour passagers qui forment les rangées (1A, 1B) de sièges, **caractérisée en ce qu'**au moins un siège (5, 5') pour passager d'aéronef selon une des revendications 1 et 2 est prévu par groupe (1, 2) de sièges pour passagers, dans laquelle au moins le siège (5, 5') pour passager d'aéronef placé à côté d'un couloir (7) de cabine est conformé de cette façon.
